# EUROPÄISCHE PATENTANMELDUNG

(11) **EP 4 807 714 A1**
(43) Veröffentlichungstag der Anmeldung: **16.09.2026**
(21) Anmeldenummer: 25163997.7
(22) Anmeldetag: 15.03.2025
(51) Int. Cl.: G09B 5/06, G09B 7/02, G09B 7/04, G09B 5/02

(54) **TRAININGSGERÄT UND VERFAHREN ZUM WIEDERHOLTEN BEREITSTELLEN VON LERNMATERIAL**

(71) Anmelder: Retain Labs GmbH, 69509 Mörlenbach (DE)
(72) Erfinder: Zeulner, Tobias, 96215 Lichtenfels (DE); Zeulner, Marco, 96215 Lichtenfels (DE); Böhm, Ilyas, 69509 Mörlenbach (DE)
(74) Vertreter: Mzb PartmbB

(57) **Zusammenfassung**

Die Erfindung betrifft ein Verfahren (1000) zur wiederholten Bereitstellung von Lernmaterial durch ein Trainingsgerät (10), wobei aus Lernmaterial eines Nutzers eine Vielzahl verschiedener Lernelemente (25) zusammengestellt wird, wobei die Lernelemente (25) abhängig von einem Erfolgsmaß mehrfach bereitgestellt werden, wobei eine Antwort des Nutzers zu einem bereitgestellten Lernelement (25) abgefragt wird, wobei das Erfolgsmaß abhängig von der Antwort ermittelt wird, wobei vorgesehen wird, dass die Antwort per Spracheingabe (1062) erfolgen kann. Des Weiteren betrifft die Erfindung ein Trainingsgerät (10) zur Implementierung des Verfahrens. Die Erfindung ermöglicht eine besonders effiziente Aneignung von Wissen und Fertigkeiten, sodass Schäden, Unfälle oder andere schwerwiegende Folgen unzureichenden Wissens vermieden werden können.

## Beschreibung

Die Erfindung betrifft ein Verfahren zur wiederholten Bereitstellung von Lernmaterial durch ein Trainingsgerät sowie ein Trainingsgerät.

### Stand der Technik

In der koreanischen Patentschrift KR102013955B1 ist ein Ausbildungssystem für die Ausbildung von Softwareexperten in praktischen Angelegenheiten sowie ein entsprechendes Verfahren beschrieben.

Aus der chinesischen Offenlegungsschrift CN118446851A sind ein Verfahren und ein System zum Lernen von Sprachinhalten bekannt.

Aus der US-Patentschrift US11798428B2 ist ein System zum asynchronen Bereitstellen von Inhalten von ein oder mehreren Autoren gemäß einem Spaced repetition (deutsch: "verteilte Wiederholung") -Verfahren bekannt.

Aus der Website https://github.com/open-spaced-repetition/free-spaced-repetitionscheduler, Abruf am 12.03.2025, ist Programmcode für eine Bereitstellung von Inhalten nach einem "Free Spaced Repetition Scheduling"- (im Folgenden FSRS-) Algorithmus bekannt.

Aus der US-Patentschrift US10628138 B2 ist eine automatische Verwaltung von Verbesserungsprozessen bekannt, die eine unerwünschte Verwendung von Code in einer Anwendung basierend auf einer prognostizierten Bewertung sowie anhand von Risikovektoren kontrolliert.

### Offenbarung der Erfindung

Unfälle, Fehler sowie damit verbundene Korrekturarbeiten bis hin zu Todesfällen lassen sich oftmals vermeiden, wenn in Planungs-, Fertigungs- sowie Qualitätssicherungsprozesse eingebundene Personen das für die jeweiligen Tätigkeiten notwendige Wissen sowie notwendige Fertigkeiten sich aneignen und das Wissen und die Fertigkeiten aufrechterhalten und zu einem Bedarfszeitpunkt abrufen und anwenden können.

Allgemein ist das Lernen neuer Inhalte sowie das Aufrechterhalten zuvor gelernter Inhalte ein fundamentaler Bestandteil des Alltags, einschließlich beruflicher, insbesondere technischer Tätigkeiten, beispielsweise bei der Herstellung und / oder Nutzung von Maschinen oder insbesondere bei der Nutzung von Medizingeräten.

Grundsätzlich lassen sich Hürden des Lernens in zwei Kategorien einteilen, erstens neue Inhalte aneignen sowie zweitens aufrechterhalten zuvor gelernter Inhalte.

Für beide Kategorien kommen oftmals sogenannte Lernkarten zum Einsatz. Die Lernkarten können virtuell oder physisch ausgebildet sein. In der Regel weisen sie zwei Seiten auf, wobei auf der einen Seite eine Frage und auf der anderen Seite eine Antwort zu finden ist.

Ein Nutzer, der sich ein Wissen oder eine Fertigkeit aneignen möchte, kann sich zu einem zu lernenden Lernmaterial eine Vielzahl von Lernelementen, beispielsweise in Form von Lernkarten, erstellen. Er kann dann, insbesondere wenn die Lernelemente in Form von Lernkarten ausgebildet sind, sich nacheinander die einzelnen Lernkarten auf der ersten Seite bereitstellen, eine möglichst passende Antwort jeweils suchen und diese Antwort mit dem Inhalt der zweiten Seite vergleichen. Er kann ein Erfolgsmaß berechnen, beispielsweise die Antwort als richtig oder falsch oder in einer ordinalskalierten Skala einstufen. Abhängig vom Erfolgsmaß kann er dann zu einem späteren Zeitpunkt die betreffende Lernkarte sich erneut bereitstellen oder, insbesondere bei richtiger Antwort oder bei einem entsprechenden Erfolgsmaß, die Lernkarte aussortieren.

Je nach Art und Weise des Erfolgsmaßes und seiner Berechnung kann davon ausgegangen werden, dass zumindest kurz nachdem alle Lernkarten auf eine solche Weise gelernt worden sind, das Wissen bzw. die Fertigkeit hinreichend verfügbar sind. Um einem Vergessen vorzubeugen, kann der Nutzer beispielsweise in regelmäßigen Abständen sich erneut die Lernelemente zur Überprüfung bereitstellen.

Es sind bereits Systeme bekannt, die versuchen, solche Verfahren zur wiederholten Bereitstellung von Lernmaterial zu verbessern.

Ein Ansatzpunkt besteht darin, die Lernelemente maschinell unterstützt aus dem Lernmaterial abzuleiten. Ein weiterer Ansatzpunkt besteht darin, die Bereitstellung der Lernelemente maschinell zu unterstützen.

Beispielsweise kommen Kl- (Künstliche Intelligenz-) basierte Systeme zum Einsatz, um aus Lernmaterial, beispielsweise in Form eines im Internet verfügbaren Videos oder in Form von Vorlesungsskripten oder dergleichen, automatisiert Lernkarten zu erstellen.

Jedoch ergibt sich bislang hieraus oftmals nur ein geringer Nutzen. So kann es bei einem aktuellen System geschehen, dass, wenn ein Nutzer beispielsweise ein Kinderlied lernen möchte und dazu das System auf ein Video verweist, in dem das Kinderlied vorgespielt und vorgesungen wird, das System Lernkarten mit nicht zielführenden Inhalten erstellt. Beispielsweise können Fragen auf der ersten Seite aufgeführt werden, welche Emotionen ein in dem Kinderlied genanntes Tier fühlt, anstatt dass die Lernkarten Verszeilen des zu lernenden Liedtextes beinhalten.

Aufgabe der vorliegenden Erfindung ist es daher, Verfahren und Vorrichtungen anzubieten, die es ermöglichen, dass ein Nutzer sich effizient Wissen und / oder Fertigkeiten aneignen kann.

Gelöst wird die Aufgabe zunächst durch ein Verfahren zur wiederholten Bereitstellung von Lernmaterial durch ein Trainingsgerät, wobei aus Lernmaterial eines Nutzers eine Vielzahl verschiedener Lernelemente zusammengestellt wird, wobei die Lernelemente abhängig von einem Erfolgsmaß mehrfach bereitgestellt werden, wobei eine Antwort des Nutzers zu einem bereitgestellten Lernelement abgefragt wird, wobei vorgesehen wird, dass die Antwort per Spracheingabe erfolgen kann, wobei das Erfolgsmaß abhängig von der Antwort ermittelt wird,.

Das Verfahren sieht somit vor, zunächst aus Lernmaterial Lernelemente zusammenzustellen. Die Lernelemente können beispielsweise physischen oder virtuellen, insbesondere zweiseitigen, Lernkarten entsprechen. Die Lernelemente können insbesondere Wissenspaaren entsprechen. Ein Wissenspaar kann beispielsweise eine Frage und eine dazugehörige Antwort umfassen.

Die Lernelemente werden abhängig von einem Erfolgsmaß mehrfach bereitgestellt. Das Erfolgsmaß kann beispielsweise einer Beurteilung einer Antwort zu einem Lernelement entsprechen. Es kann binär sein. Beispielsweise kann es der binären Unterscheidung zwischen richtig und falsch entsprechen. Das Erfolgsmaß kann auch mehrfach abgestuft sein oder ein wenigstens intervallskaliertes Erfolgsmaß darstellen. Das Erfolgsmaß kann auch mehrdimensional sein. Das Erfolgsmaß kann auch einer Einschätzung durch den Nutzer selbst entsprechen. Beispielsweise kann es einer Einschätzung entsprechen, wie sicher der Nutzer bei der Abgabe der Antwort gewesen ist. Bei einem einfachen und insbesondere kostengünstigen System kann auch vorgesehen sein, dass die Antwort das Erfolgsmaß beinhaltet. Beispielsweise kann der Nutzer abgefragt werden, wie gut er das betreffende Wissen verfügbar gelernt hat. Bei einem besonders effizienten System kann die Antwort einen Freitext umfassen, der anschließend maschinell semantisch ausgewertet und daraus das Erfolgsmaß abgeleitet wird.

Dabei kann die Antwort per Spracheingabe erfolgen. Denkbar ist, dass unterschiedliche Kanäle für die Eingabe der Antwort dem Nutzer wahlweise zur Verfügung gestellt werden.

Beispielsweise kann eine Spracheingabe über eine Spracheingabeeinheit und / oder eine Tastatureingabe und / oder eine handschriftliche und / oder zeichnerische Eingabe auf einem berührungsempfindlichen Display (Touchdisplay) ermöglicht werden.

Dabei hat eine Eingabemöglichkeit per Spracheingabe besondere Vorteile. Zunächst kann die Eingabe umfangreicher Texte für den Nutzer einfacher und schneller sein als beispielsweise per Eingabe über eine Tastatur. Spracheingabe ist auch während der Ausführung anderer Tätigkeiten, beispielsweise beim Spazierengehen in einem Park oder dergleichen, möglich. Die Spracheingabe kann auch mit einer Sprachausgabe des Trainingsgeräts verbunden werden. Das Trainingsgerät kann eingerichtet sein, beispielsweise mithilfe eines Large Language Models, einen Dialog mit dem Nutzer zu führen. Das Trainingsgerät kann eingerichtet sein, eine per Spracheingabe eingegebene Antwort auf semantische als auch auf nichtsemantische Aspekte zu analysieren. Abhängig von der Analyse kann auch das Erfolgsmaß bestimmt werden. Beispielsweise kann in die Berechnung des Erfolgsmaßes die Zeitdauer einfließen, bis der Benutzer die Antwort abgegeben hat. Diese Zeitdauer kann beispielsweise mit einer Bedenkzeit des Nutzers und damit mit der Sicherheit des zugrunde liegenden Wissens korrelieren.

Somit lässt sich eine effizientere Eingabe von Antworten durch den Nutzer erreichen. Der Nutzer kann ein unmittelbares Feedback erhalten. Zusätzliche Daten über die Antwort über die reine Semantik hinaus lassen sich gewinnen, sodass beispielsweise das Erfolgsmaß präziser ermittelbar und der Lernfortschritt effizienter und präziser steuerbar ist.

Insgesamt lässt sich somit die Aneignung der Inhalte des Lernmaterials gegenüber weiter verbessern.

Die Bereitstellung der Lernelemente kann beispielsweise durch Präsentation auf einem Bildschirm, dem Touchdisplay, durch Sprachausgabe oder auch, im Falle von physisch verfügbaren Lernelementen, durch Herausgabe des betreffenden Lernelements an den Nutzer erfolgen.

Denkbar ist, dass Lernelemente wiederholt gemäß einem Spaced-Repetition-Algorithmus, beispielsweise einem FSRS-Algorithmus, bereitgestellt werden. Bereits in der Form, wie er in der eingangs erwähnten Quelle vorgesehen ist, ergibt sich eine gute Effizienz hinsichtlich der Bereitstellung von Lernelementen, um einem übermäßigen Vergessen bereits gelernter Inhalte vorzubeugen.

Als eine Ausprägung eines Spaced-Repetition-Algorithmus ist bei dem FSRS-Algorithmus zudem denkbar, die Bestimmung von Intervallen, mit denen ein Lernelement erneut bereitgestellt werden soll, mit, insbesondere nichtsemantischen, Aspekten, wie beispielsweise der Bedenkzeit des Nutzers, einer korrekten Aussprache des Nutzers, insbesondere bei Fachbegriffen, einer Dauer der Antwort, oder dergleichen weiter zu optimieren.

Zur Erstellung der Lernelemente aus dem Lernmaterial können Multimediainhalte, insbesondere Bilder, extrahiert und / oder generiert werden. Die Extraktion und / oder Generierung der Multimediainhalte kann mithilfe eines entsprechend trainierten KI-Moduls erfolgen. Durch solche Multimediainhalte können auch ansonsten schwer merkbare Lernmaterialien dem Nutzer verbessert im Gedächtnis bleiben. Auch so kann einem Vergessen entgegengewirkt werden.

Auch ist denkbar, dass die Lernelemente in Abhängigkeit von einem einstellbaren und / oder verfügbaren Kontext erstellt werden.

Der Kontext kann ein niedrigdimensionaler, beispielsweise ein ein-, zwei- oder dreidimensionaler, Parameter sein. Beispielsweise kann der Kontext eine Art charakterisieren, nach der die Lernelemente aus dem Lernmaterial zu bilden sind. Im eingangs genannten Beispiel des Lernens eines Kinderliedes könnte beispielsweise als Kontext berücksichtigt werden, dass ein Liedtext zu lernen ist und nicht die Bedeutung des Inhalts des Liedtextes zu lernen ist und dementsprechend die Lernelemente Textteile des Liedtextes und nicht semantisch aus dem Liedtext abgeleitete Texte enthalten sollten.

Der Kontext kann auch ein hochdimensionaler Kontext sein. Beispielsweise kann textuelles Material verfügbar sein, das eine Form und / oder Art und / oder Beispiele der zu erstellenden Lernelemente repräsentiert. Beispielsweise können, wenn das Lernmaterial einen in einer Prüfung zu prüfenden Prüfungsstoff umfasst, frühere Prüfungsfragen aus früheren Prüfungen vorliegen. Es ist oftmals zu erwarten, dass eine dann anstehende Prüfung ähnliche Prüfungsfragen beinhalten wird. Somit kann der vorliegende, insbesondere hochdimensionale, Kontext, im Beispiel also frühere Prüfungsfragen, analysiert werden und das Analyseergebnis bei der Erstellung der Lernelemente berücksichtigt werden.

Grundsätzlich können die Lernelemente mithilfe eines geeignet trainierten KI-Moduls aus dem Lernmaterial gebildet werden.

Zur Berücksichtigung des Kontextes kann das KI-Modul mit annotierten Trainingsdaten trainiert werden, wobei die Annotationen der Trainingsdaten die Kontextdaten und / oder ähnliche Kontextdaten umfassen. Ferner können die Annotationen zu unterschiedlichen Lernmaterialien zugeordnete Sätze von möglichen Lernelementen umfassen.

Zur Erstellung der Lernelemente kann der Nutzer einen Kontext auswählen und / oder bereitstellen, sodass auf Basis des ausgewählten und / oder bereitgestellten Kontextes und dem Lernmaterial die Lernelemente durch beispielsweise das Kl-Modul erstellt werden können. Grundlegende Fehlbildungen der Lernelemente wie eingangs im Stand der Technik beschrieben, können somit wirkungsvoll vermieden werden.

Zur weiteren Personalisierung und damit für eine individuell auf den Nutzer abgestimmte Effizienz können die Lernelemente in Abhängigkeit von einem auf den Nutzer der Lernelemente bezogenen Zielparameter erstellt werden.

Insbesondere kann ein Detaillierungsgrad der Lernelemente und / oder eine Anzahl der zu erstellenden Lernelemente in Abhängigkeit von dem Zielparameter variiert werden. Der Zielparameter kann von dem Nutzer einstellbar sein. Der Zielparameter kann beispielsweise einen gewünschten Zeitaufwand, ein gewünschtes Erfolgsmaß, beispielsweise eine gewünschte Note im Falle einer Prüfung, einen maximalen Zeitaufwand pro Tag und / oder pro einer Lerneinheit und / oder einen verfügbaren Zeitraum betreffen.

Die Erstellung von Lernelementen kann in besonderem Maße auf die individuellen Bedürfnisse des Nutzers abgestimmt werden und damit die Aneignung von Wissen in besonders effizienter Weise ermöglicht werden, wenn ein individueller Kontextparameter, beispielsweise ein Ort, ein Lernniveau, eine Ausbildungsart und / oder ein Land, erfasst wird und abhängig von dem individuellen Kontextparameter die Lernelemente erstellt werden und / oder abhängig von dem individuellen Kontextparameter die Lernelemente bereitgestellt werden.

Dazu kann vorgängig eine Zuordnung zwischen dem Kontextparameter und Arten, Formen und / oder Umfängen der zu erstellenden Lernelemente erfasst und im Trainingsgerät abrufbar gespeichert werden. Beispielsweise kann in Abhängigkeit von einem Lernniveau, beispielsweise einer Klassenstufe oder einer Semesternummer im Rahmen eines Studienganges, ein Detaillierungsgrad zur Erstellung von Lernelementen aus ein und demselben Lernmaterial variiert werden.

Bildet beispielsweise eine im Internet verfügbare Wissenssammlung, beispielsweise zum Thema Elektrizität, die Basis für das Lernmaterial, so kann ein geringer Detaillierungsgrad zur Erstellung der Lernelemente berücksichtigt werden, wenn die Lernelemente für beispielsweise ein Grundschulniveau zu erstellen sind, und ein hoher Detaillierungsgrad kann berücksichtigt werden, wenn die Lernelemente für einen Nutzer im Rahmen eines Physik-Studiums erstellt werden. Allgemein kann in den Detaillierungsgrad beispielsweise ein gewünschter oder vorgegebener Schwierigkeitsgrad, eine Alters- oder Bildungsstufe oder dergleichen einfließen.

Auch können örtliche Besonderheiten oder Unterschiede auf diese Weise berücksichtigt werden. Beispielsweise kann hierdurch berücksichtigt werden, wenn bei ein und dem gleichen Studienfach, beispielsweise Medizin, in einem Land Hochschulen typischerweise Prüfungsfragen in Form von multiple Choice-Aufgaben stellen und in einem anderen Land dagegen typischerweise Freitext-Antworten verlangt werden. In analoger Weise kann auch die Gesamtanzahl der zu erstellenden Lernelemente variiert werden.

Der individuelle Kontextparameter kann durch den Nutzer eingegeben werden. Denkbar ist auch, dass der individuelle Kontextparameter automatisch ermittelt und / oder dem Nutzer vorgeschlagen wird. Beispielsweise kann eine Standortinformation ausgewertet werden, um den Ort und / oder das Land als individuellen Kontextparameter zu ermitteln.

Neben der Planung von Wiederholungen von Lernelementen, also erneuten Bereitstellungen der Lernelemente, die beispielsweise mithilfe des FSRS-Algorithmus geplant werden können, kann auch geplant werden, wann Lernelemente das erste Mal bereitgestellt werden. Eine solche erste Bereitstellung der Lernelemente kann in Abhängigkeit von einem auf den Nutzer bezogenen Planungsparameter geplant werden. In Abhängigkeit von dem auf den Nutzer bezogenen Planungsparameter kann eine bestehende Planung auch aktualisiert werden. Der Planungsparameter kann inhaltlich ähnlich dem Zielparameter ausgebildet sein. Beispielsweise kann er einen gewünschten Zeitaufwand, ein gewünschtes Erfolgsmaß, beispielsweise eine gewünschte Note im Falle einer Prüfung, einen maximalen Zeitaufwand pro Tag und / oder pro einer Lerneinheit und / oder einen verfügbaren Zeitraum betreffen. Der Planungsparameter kann primär eine erste Bereitstellung beeinflussen, denkbar ist jedoch auch, dass er sich zusätzlich auf nachfolgende Bereitstellungen auswirkt.

Insgesamt lässt sich somit die erste Bereitstellung von Lernelementen besonders individuell anpassen. Beispielsweise können Überlastungen des Nutzers proaktiv durch teilweises Verschieben von Bereitstellungen von Lernelementen vermieden werden. Wenn beispielsweise ursprünglich sehr viele Lernelemente erneut bereitgestellt werden sollen und dazu noch erstmalig weitere Lernelemente zusätzlich bereitgestellt werden sollen, kann in einem solchen Fall die Planung der erstmaligen Bereitstellung angepasst werden, sodass einzelne oder alle der ursprünglich erstmalig bereitzustellenden Lernelemente auf beispielsweise eine nachfolgende Lerneinheit verschoben werden.

Für eine weitere Steigerung der Effizienz der Wissensaneignung kann dem Nutzer eine Verlaufsinformation über den Fortschritt der Wissensaneignung übermittelt werden. Dazu kann eine Prognose über einen zukünftigen Verlauf der Bereitstellung der Lernelemente und / oder des Erfolgsmaßes erstellt werden. Die Prognose kann auf Basis einer linearen und / oder einer nichtlinearen Regression erfolgen. Sie kann auch auf Basis eines geeignet trainierten neuronalen Netzes erfolgen. Die Parametrisierung der Regression und / oder das Training des neuronalen Netzes kann anhand von Verlaufsdaten anderer, insbesondere früherer, Nutzer des Verfahrens bzw. des Trainingsgerätes erfolgen. Die Prognose kann beispielsweise fortlaufend, somit in Echtzeit, oder Intervall-basiert erfolgen. Die Verlaufsinformation kann auch in Abhängigkeit von einem Ziel-Erfolgsmaß erfolgen. Die Verlaufsinformation kann in Form von Leistungskennzahlen und / oder in grafischer Form übermittelt werden.

Auf Basis der Verlaufsinformation kann der Nutzer dann prüfen und entscheiden, ob beispielsweise bei geänderten Rahmenbedingungen der Zielparameter und / oder der Planungsparameter angepasst werden müssen.

In Abhängigkeit von einem Umfang von bereitgestellten Lernelementen und / oder von Erfolgsmaßen können die Lernelemente modifiziert und / oder die Bereitstellung der Lernelemente modifiziert werden. So lässt sich ein Fälligkeitsdatum flexibler festsetzen, Überlastungen, beispielsweise nach Unterbrechungen können vermieden werden, und auf geänderte Lernziele, beispielsweise durch Änderung des Lernmaterials, kann reagiert werden. Es können optimale Lernzeiten bestimmt werden, beispielsweise durch Überwachung, ob die Erfolgsmaße beispielsweise bei einem bestimmten Nutzer oder bei einer Nutzergruppe mit einer Tageszeit korrelieren. Es lassen sich individuelle Lerntage festlegen. Insgesamt kann ein Pensum von zu lernenden Lernelementen auf die Möglichkeiten und Bedürfnisse des Nutzers angepasst einrichten. Denkbar ist auch, Lernelemente in Abhängigkeit des Erfolgsmaßes zu modifizieren. So können überladene Lernelemente vermieden werden. Bei Lernelementen mit einem beispielsweise sehr geringen Erfolgsmaß können die dort verwerteten Lerninhalte auf mehrere Lernelemente verteilt werden. Die so modifizierten Lernelemente können dem Nutzer bereitgestellt werden. Lerninhalte, die der Nutzer sich bereits erfolgreich angeeignet hat, können so frühzeitiger aussortiert werden und ein Fokus auf die für ihn schwierig zu lernenden Lerninhalte bzw. auf die entsprechenden Lernelemente verstärkt gerichtet werden. Auch so kann die Effizienz, insbesondere bei schwierigen Lernmaterialien, verbessert werden.

Ist beispielsweise aus separaten Datenquellen und / oder durch Eingabe durch den Nutzer bekannt, ob oder welche Lerninhalte welcher Lernelemente unterschiedliche Prioritäten aufweisen, können die Lernelemente in Abhängigkeit von der Priorisierung bereitgestellt werden. Insbesondere können Wiederholungsintervalle für besonders hoch zu priorisierende Lernelemente kürzer festgelegt werden als Wiederholungsintervalle für weniger hoch zu priorisierende Lernelemente.

Eine besonders ausgeprägte Effizienzsteigerung gegenüber dem Stand der Technik verfügbaren Systemen und Verfahren lässt sich erreichen, wenn wenigstens ein Lernelement in Abhängigkeit von einem Erfolgsmaß eines anderen Lernelements bereitgestellt wird.

Dazu kann im Vorfeld das Lernmaterial und / oder anderes Material desselben Themenbereichs, beispielsweise gewonnen aus allgemein verfügbaren Datenbanken und / oder aus vorangegangenen Nutzungen durch andere Nutzer und / oder durch den Nutzer, im Hinblick auf Abhängigkeiten analysiert werden. Solche Abhängigkeiten können Zusammenhänge repräsentieren, bei denen ein Lerninhalt das Wissen oder die Fertigkeit in Bezug auf einen anderen Lerninhalt voraussetzt. Betrifft das Lernmaterial beispielsweise Grundrechenarten, so sollte für Lernelemente, die die Division betreffen, sichergestellt werden, dass zumindest ein hinreichender Anteil der Lernelemente, die die Multiplikation betreffen, mit einem ausreichenden Erfolgsmaß vom Nutzer beantwortet werden können. Indem somit sichergestellt wird, dass der Nutzer hinreichend gut die Multiplikation beherrscht, bevor zur Division gewechselt wird, können eine unnötige Frustration und unnötige erneute Bereitstellungen von Lernelementen, die Division betreffend, die er mit seinem Ausgangswissen nicht erfolgreich beantworten kann, vermieden werden.

Um Fehlproduktionen, Unfälle, Beschädigungen anderer Objekte oder dergleichen bei technisch anspruchsvollen Tätigkeiten, beispielsweise bei Schweißvorgängen, zu vermeiden ist in der Regel sicherzustellen, dass die Grundlagen der Tätigkeit dem Nutzer bekannt sind, bevor er Details zur Ausführung lernen kann. Bei Schweißvorgängen ist beispielsweise das Wissen um Materialien und Einstellungen eines Schweißgeräts essenziell, bevor Details des Schweißens selbst, beispielsweise die Bewegung einer Schweißpistole oder dergleichen, vermittelt werden können.

Bevor eine Bedienung eines medizinischen Operationsroboters vermittelt werden kann, sollte dem Nutzer zunächst das Wissen über beispielsweise einen Bewegungsmechanismus des Operationsroboters vermittelt werden.

In der Landwirtschaft sollten beispielsweise grundsätzlich Strukturen von Pilzen bekannt sein, bevor auf diesen Strukturen aufbauende Unterscheidungsmerkmale verschiedener Pilzarten gelernt werden können. So können selbst sehr ähnliche Pilzarten unterschiedlicher Giftigkeit sicher unterschieden werden. Schwere Krankheiten oder Todesfälle können vermieden werden.

Entsprechende Abhängigkeiten können durch das Trainingsgerät ermittelt werden und / oder vor und / oder während der Erstellung der Lernelemente von einer entsprechend befähigten Person eingebbar sein.

Die sogenannte Pomodoro-Technik ermöglicht ein längerfristiges Lernen. Dazu kann vorgesehen sein, dass Lernelemente in Zeitblöcken einer definierten Länge bereitgestellt werden, wobei zwischen zwei Zeitblöcken eine Mindestpause vorgesehen wird. Die Zeitblöcke können beispielsweise eine definierte Länge von beispielsweise 25 Minuten aufweisen. Die Mindestpause kann 5 Minuten betragen. Es kann eine Höchstanzahl von Zeitblöcken definiert sein, die in einer Lerneinheit, beispielsweise an einem Tag, maximal zu absolvieren sind.

Wie auch aus den vorangegangenen Beispielen ersichtlich ist, lässt sich das Verfahren besonders vorteilhaft anwenden, wenn das Lernmaterial beispielsweise eine Konstruktion, Produktion und / oder Qualitätssicherung eines Gegenstands, die Bedienung einer Maschine, die Bedienung eines medizintechnischen Produktes und / oder Landwirtschaft betrifft.

Denkbar ist auch, dass in Abhängigkeit des Erfolgsmaßes eine sich auf das betreffende Lernelement beziehende Text- und / oder Multimediaausgabe erfolgt.

Beispielsweise bei einem nicht ausreichenden Erfolgsmaß, beispielsweise bei einer falschen Antwort, kann ein erläuternder Text und / oder ein erläuternder Multimediainhalt zu dem betreffenden Lernelemente ausgegeben werden. Insbesondere kann es bevorzugt sein, wenn der Multimediainhalt eine Sprachausgabe umfasst. Im Zusammenhang mit der Spracheingabe kann der Nutzer somit in einem erlebten Dialog das sich anzueignende Lernelement zusätzlich erläutert bekommen.

In den Rahmen der Erfindung fällt des Weiteren ein Trainingsgerät, das mit einer Ausgabeeinheit und einer Spracheingabeeinheit ausgestattet ist, wobei das Trainingsgerät eingerichtet ist, ein Verfahren der vorangehend beschriebenen Art zu implementieren. Die Ausgabeeinheit kann beispielsweise eine Displayeinheit, beispielsweise ein Touchdisplay, und / oder eine Sprachausgabeeinheit umfassen.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

### Beschreibung der Zeichnungen

Es zeigen:
- Fig. 1: ein Blockschaltbild eines Trainingsgeräts und
- Fig. 2: ein Verfahren zur wiederholten Bereitstellung von Lernmaterial durch ein Trainingsgerät.

Zur Erleichterung des Verständnisses der Erfindung werden in der nachfolgenden Figurenbeschreibung für sich entsprechende Elemente jeweils die gleichen Bezugszeichen verwendet. Insbesondere wird das Verfahren anhand der für das Trainingsgerät eingeführten Elemente und Bezugszeichen erläutert.

### Ausführungsformen der Erfindung

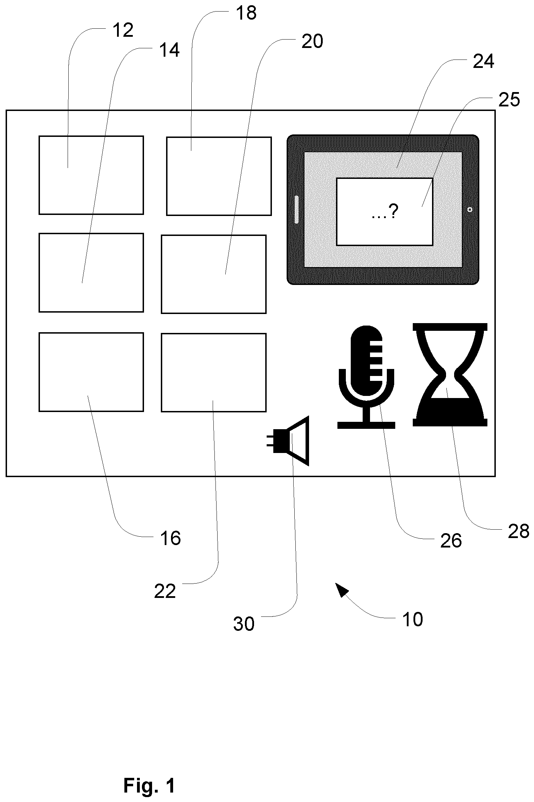

Fig. 1 zeigt ein Trainingsgerät 10. Das Trainingsgerät 10 umfasst einen Lernmaterialspeicher 12, einen Lernelementespeicher 14 sowie einen Programmcodespeicher 16 und einen Arbeitsspeicher 18.

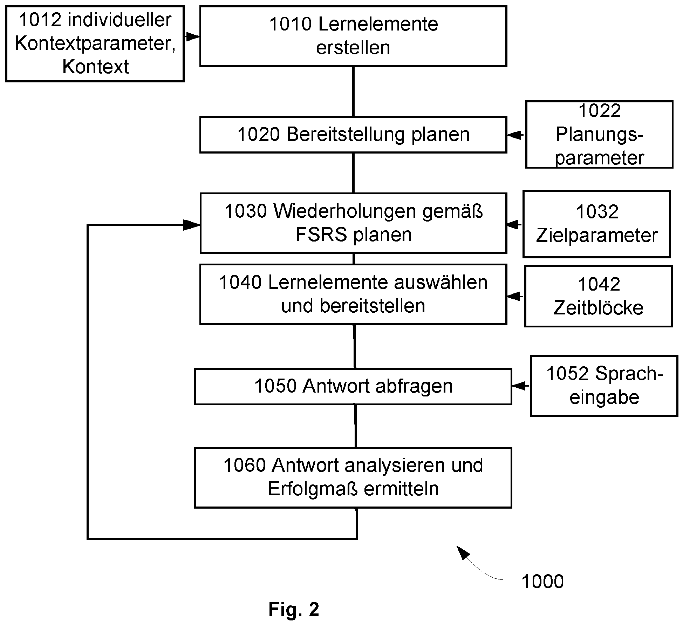

Im Programmcodespeicher 16 ist Programmcode ausführbar abgelegt, der auf einem Prozessor 20 des Trainingsgeräts 10 ausgeführt werden kann. Der Programmcode ist eingerichtet, das vorangehend allgemein und nachfolgend in Verbindung mit Fig. 2 näher erläuterte Verfahren mithilfe des Trainingsgeräts 10 zu implementieren. Das Trainingsgerät 10 umfasst des Weiteren ein oder mehrere Kl-Module 22. Die KI-Module 22 können mit spezifisch auf ihren jeweiligen Zweck gerichteten Trainingsdaten, insbesondere den annotierten Trainingsdaten wie vorangehend beschrieben, trainiert sein. Die KI-Module 22 können ebenfalls durch den Programmcode gesteuert werden.

Weiter weist das Trainingsgerät 10 eine Ausgabeeinheit in Form eines Touchscreens 24 auf. Beispielhaft ist in dem in Fig. 1 gezeigten Zustand ein Lernelement 25 auf dem Touchscreen 24 dargestellt. Das Lernelement 25 ist in Form einer virtuellen Karte, von der eine erste Seite in Fig. 1 dargestellt ist, ausgebildet.

Das Trainingsgerät 10 ist eingerichtet, zu lernendes Lernmaterial im Lernmaterialspeicher 12 zur weiteren Verarbeitung abzulegen. Beispielsweise kann das Trainingsgerät 10 eingerichtet sein, nach Eingabe eines Hyperlinks und / oder durch Abscannen eines QR-Codes oder dergleichen das Lernmaterial von einer so angegebenen Adresse herunterzuladen und im Lernmaterialspeicher 12 abzulegen.

Denkbar ist auch, dass der Benutzer das Lernmaterial manuell, beispielsweise über das Touchdisplay 24, eingibt oder durch Anschließen eines tragbaren Speichers an das Trainingsgerät 10 übermittelt. Denkbar ist auch, dass das Trainingsgerät 10 ein OCR-Modul, das softwarebasiert in Verbindung mit einer eingebauten Kamera implementiert sein kann, umfasst, mit dem das Lernmaterial aufgenommen und in eine semantisch verwertbare Form gebracht werden kann.

Der Programmcode ist weiter eingerichtet, bei Ausführung auf dem Prozessor 20 aus dem im Lernmaterialspeicher 12 befindlichen Lernmaterial unter Nutzung eines hierauf spezifisch trainierten KI-Moduls 22 eine Vielzahl von Lernelementen 25 zu erstellen und im Lernelementespeicher 14 zur weiteren Nutzung abrufbar abzulegen.

Weiter weist das Trainingsgerät 10 eine Spracheingabeeinheit 26 auf, mit der Antworten eines Nutzers des Trainingsgerät 10 aufgenommen, transkribiert und analysiert werden können.

Im Trainingsgerät 10 ist auch ein Timer 28 vorgesehen, der beispielsweise zur Überwachung von Zeitblöcken vom Trainingsgerät 10 genutzt werden kann. Der Timer 28 kann auch in den Prozessor 20 integriert sein.

Auch weist das Trainingsgerät 10 eine Sprachausgabeeinheit 30 auf, die eingerichtet ist, Text in Sprache zu konvertieren und auszugeben.

Denkbar ist, dass das Trainingsgerät 10 mit einem entfernten Rechnersystem verbunden ist. Auf dem entfernten Rechnersystem können besonders rechenintensive Schritte ausgelagert sein. Beispielsweise kann das entfernte Rechnersystem ein oder mehrere der KI-Module 22 beherbergen. In diesem Fall kann auf in das Trainingsgerät 10 integrierte KI-Module 22 verzichtet werden.

Denkbar ist auch, dass das Trainingsgerät 10 auf einem entfernten Rechnersystem implementiert ist, wobei der Zugriff und die Kommunikation, beispielsweise die Spracheingabe und / oder die Bereitstellung der Lernelemente 25, über ein mit dem entfernten Rechnersystem verbundenen Endgerät erfolgt. Eine in diesem Fall über das Endgerät erfolgende Spracheingabe mit Übermittlung an das entfernte Rechnersystem kann im Rahmen der vorliegenden Erfindung als Spracheingabe in das Trainingsgerät 10 angesehen werden. Analoges gilt für eine mittelbare Bereitstellung von Lernelementen 25 auf dem Endgerät.

Fig. 2 zeigt in einer schematischen Darstellung ein Verfahren 1000 zur wiederholten Bereitstellung von Lernmaterial durch ein Trainingsgerät 10.

Aus dem Lernmaterial eines Nutzers werden in einem Schritt 1010 eine Vielzahl verschiedener Lernelemente 25 erstellt. Die Erstellung der Lernelemente 25 erfolgt in Abhängigkeit von von dem Nutzer vorgebbaren Zusatzdaten 1012 in Form individueller Kontextparameter sowie einem Kontext.

Anhand der erstellten Lernelemente 25 und unter Berücksichtigung von beispielsweise vom Nutzer vorab eingegebenen Planungsparametern 1022 wird in einem Schritt 1020 eine erstmalige Bereitstellung der Lernelemente 25 geplant.

Unter Berücksichtigung von beispielsweise vom Nutzer vorab eingegebenen Zielparametern 1032 werden in einem Schritt 1030 Wiederholungen von Lernelementen 25 gemäß einem FSRS-Algorithmus geplant. Sofern eine Planung der Wiederholungen bereits vorliegt, kann diese bei Bedarf in diesem Schritt aktualisiert werden.

Gemäß dem Bereitstellungsplan sowie den geplanten Wiederholungen werden in einem Schritt 1040 die Lernelemente 25 ausgewählt und bereitgestellt. In dem vorliegenden Ausführungsbeispiel werden dazu die ausgewählten Lernelemente 25 auf dem Touchdisplay 24 abgebildet.

Die Bereitstellung erfolgt unter Berücksichtigung von Zeitblöcken 1032, die mithilfe des Timer 28 überwacht werden. Ein Zeitblock umfasst dabei 25 Minuten. Nach Ablauf eines Zeitblocks erfolgt eine Pause für mindestens 5 Minuten, bevor ein nachfolgender Zeitblocks beginnen kann.

In einem Schritt 1050 wird dann eine Antwort abgefragt. Zur Beantwortung kann der Nutzer eine Spracheingabe über die Spracheingabeeinheit 26 tätigen. Wahlweise kann er seine Antwort auch über das Touchdisplay 24 eingeben.

Die eingegebene Antwort wird in einem Schritt 1060 analysiert und daraus ein Erfolgsmaß ermittelt. Bei einer Spracheingabe werden insbesondere Antwortgeschwindigkeiten und Stimmmerkmale ausgewertet. Anhand der Antwortgeschwindigkeiten und der Stimmmerkmale sowie anhand eines aus den Inhalten der Antwort abgeleiteten Maßes der Korrektheit der Antwort, insbesondere einem Übereinstimmungsgrad mit einer Sollantwort entsprechend einer zweiten Seite der Lernelemente 25, wird für das bereitgestellte Lernelement 25 das Erfolgsmaß ermittelt.

Das Verfahren kann wieder beginnend mit dem Schritt 1030 fortgesetzt werden.

Das Verfahren kann enden, wenn sich in den Schritten 1030 und 1040 keine bereitzustellenden Lernelemente 25 mehr ergeben.

Alternativ oder ergänzend ist auch denkbar, dass der Nutzer das Verfahren manuell beenden kann.

### Bezugszeichenliste

10 Trainingsgerät
12 Lernmaterialspeicher
14 Lernelementespeicher
16 Programmcodespeicher
18 Arbeitsspeicher
20 Prozessor
22 KI-Modul
24 Touchscreen
25 Lernelement
26 Spracheingabeeinheit
28 Timer
30 Sprachausgabeeinheit
1000 Verfahren
1010 Schritt
1012 Zusatzdaten
1020 Schritt
1022 Planungsparameter
1030 Schritt
1032 Zielparameter
1040 Schritt
1042 Zeitblöcke
1050 Schritt
1052 Spracheingabe
1060 Schritt

## Patentansprüche

1. Verfahren (1000) zur wiederholten Bereitstellung von Lernmaterial durch ein Trainingsgerät (10),
- wobei aus Lernmaterial eines Nutzers eine Vielzahl verschiedener Lernelemente (25) zusammengestellt wird,
- wobei die Lernelemente (25) abhängig von einem Erfolgsmaß mehrfach bereitgestellt werden,
- wobei eine Antwort des Nutzers zu einem bereitgestellten Lernelement (25) abgefragt wird,
- wobei das Erfolgsmaß abhängig von der Antwort ermittelt wird,
- wobei vorgesehen wird, dass die Antwort per Spracheingabe (1062) erfolgen kann.

2. Verfahren nach dem vorhergehenden Patentanspruch, **dadurch gekennzeichnet, dass** Lernelemente (25) gemäß einem Spaced-Repetition-Algorithmus, beispielsweise einem FSRS-Algorithmus, wiederholt bereitgestellt werden.

3. Verfahren nach einem der vorhergehenden Patentansprüche, **dadurch gekennzeichnet, dass** zur Erstellung der Lernelemente (25) aus dem Lernmaterial Multimediainhalte, insbesondere Bilder, extrahiert und / oder generiert werden.

4. Verfahren nach einem der vorhergehenden Patentansprüche, **dadurch gekennzeichnet, dass** die Lernelemente (25) in Abhängigkeit von einem einstellbaren und / oder verfügbaren Kontext erstellt werden.

5. Verfahren nach einem der vorhergehenden Patentansprüche, **dadurch gekennzeichnet, dass** die Lernelemente (25) in Abhängigkeit von einem auf einen Nutzer der Lernelemente (25) bezogenen Zielparameter (1032) erstellt werden.

6. Verfahren nach einem der vorhergehenden Patentansprüche, **dadurch gekennzeichnet, dass** ein individueller Kontextparameter, beispielsweise ein Ort, ein Lernniveau, eine Ausbildungsart oder ein Land, erfasst wird und abhängig von dem individuellen Kontextparameter die Lernelemente (25) erstellt werden und / oder abhängig von dem individuellen Kontextparameter die Lernelemente (25) bereitgestellt werden.

7. Verfahren nach einem der vorhergehenden Patentansprüche, **dadurch gekennzeichnet, dass** zumindest eine erste Bereitstellung der Lernelemente (25) in Abhängigkeit von einem auf den Nutzer bezogenen Planungsparameter (1022) geplant wird und / oder eine Planung der ersten Bereitstellung aktualisiert wird.

8. Verfahren nach einem der vorhergehenden Patentansprüche, **dadurch gekennzeichnet, dass** eine Prognose über einen zukünftigen Verlauf der Bereitstellung der Lernelemente (25) und / oder des Erfolgsmaßes erstellt wird.

9. Verfahren nach einem der vorhergehenden Patentansprüche, **dadurch gekennzeichnet, dass** in Abhängigkeit von einem Umfang von bereitgestellten Lernelementen und / oder von Erfolgsmaßen Lernelemente (25) modifiziert und / oder die Bereitstellung der Lernelemente (25) modifiziert werden.

10. Verfahren nach einem der vorhergehenden Patentansprüche, **dadurch gekennzeichnet, dass** die Bereitstellung von Lernelementen (25) Abhängigkeit von einer Priorisierung erfolgt.

11. Verfahren nach einem der vorhergehenden Patentansprüche, **dadurch gekennzeichnet, dass** wenigstens ein Lernelement (25) in Abhängigkeit von einem Erfolgsmaß eines anderen Lernelements (25) bereitgestellt wird.

12. Verfahren nach einem der vorhergehenden Patentansprüche, **dadurch gekennzeichnet, dass** Lernelemente (25) in Zeitblöcken (1042) einer definierten Länge bereitgestellt werden, wobei zwischen zwei Zeitblöcken (1042) eine Mindestpause vorgesehen wird.

13. Verfahren nach einem der vorhergehenden Patentansprüche, **dadurch gekennzeichnet, dass** das Lernmaterial eine Konstruktion, Produktion und / oder Qualitätssicherung eines Gegenstands, die Bedienung einer Maschine, die Bedienung eines medizintechnischen Produktes und / oder Landwirtschaft betrifft.

14. Verfahren nach einem der vorhergehenden Patentansprüche, **dadurch gekennzeichnet, dass** in Abhängigkeit des Erfolgsmaßes zusätzliches Lernmaterial und / oder zusätzliche Lernelemente (25) erstellt werden.

15. Trainingsgerät (10), mit einer Ausgabeeinheit und einer Spracheingabeeinheit (26), wobei das Trainingsgerät (10) eingerichtet ist, ein Verfahren (1000) nach einem der vorhergehenden Patentansprüche zu implementieren.
